(19) Europäisches Patentamt
European Patent Office
Office européen des brevets

(11) Veröffentlichungsnummer: **0 100 423**
**A1**

(12) **EUROPÄISCHE PATENTANMELDUNG**

(21) Anmeldenummer: 83106020.7

(22) Anmeldetag: 21.06.83

(51) Int. Cl.³: C 08 F 246/00
C 08 F 226/06, C 07 D 207/36

(30) Priorität: 08.07.82 DE 3225555

(43) Veröffentlichungstag der Anmeldung: 15.02.84 Patentblatt 84/7

(84) Benannte Vertragsstaaten: DE FR GB IT

(71) Anmelder: CASSELLA Aktiengesellschaft
Hanauer Landstrasse 526
D-6000 Frankfurt am Main 61(DE)

(72) Erfinder: Schmitz, Hermann, Dr.
Marbachweg 313
D-6000 Frankfurt am Main 1(DE)

(72) Erfinder: Kühlein, Klaus, Dr.
Fasanenstrasse 41
D-6233 Kelkheim/Ts(DE)

(74) Vertreter: Urbach, Hans-Georg, Dr. et al,
Hanauer Landstrasse 526
D-6000 Frankfurt am Main 61(DE)

(54) **Vernetzer für wasserquellbare Polymere.**

(57) Verwendung von N-(2'alkenyl)-3-methylenpyrrolidin-2-on als Vernetzer für Polymerisate.

EP 0 100 423 A1

Ref. 3254
Dr.Eu/St

Vernetzer für wasserquellbare Polymere

Die Erfindung betrifft die Verwendung von N-(2'-alkenyl)-3-methylenpyrrolidin-2-on der allgemeinen Formel I

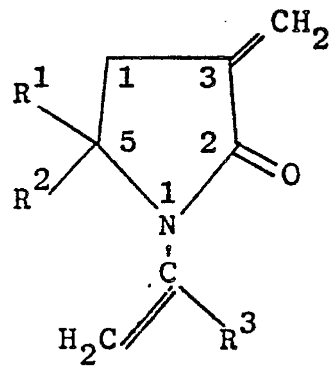

(I)

worin $R^1$, $R^2$, $R^3$ Wasserstoff oder Alkylreste bedeuten, als Vernetzer für Polymerisate, insbesondere wasserquellbare Polymerisate. Die Erfindung betrifft auch die unter Verwendung von Vernetzern der allgemeinen Formel I hergestellten vernetzten, wasserquellbaren Polymerisate.

Die Herstellung vernetzter, wasserquellbarer Polymerisate und ihre Verwendung ist in zahlreichen Patenten sowie in der Fachliteratur ausführlich beschrieben worden. Als flüssigkeitsabsorbierende Substanzen, sogenannte Superabsorbentien, werden sie vornehmlich in Hygieneartikeln, wie z.B. Windeln, Binden und Tampons, eingesetzt. So sind aus der DE-A1 27 06 135 Verdickungsmittel für durch künstliche Ausgänge ausgeschiedenen Darminhalt und/oder Harn bekannt, die durch einen Gehalt an wenigstens einem vernetzten, in Wasser nur noch quellbaren Polymeren gekennzeichnet sind. Als geeignete Polymere werden unter anderem solche auf der Basis von Acrylsäure, Methacrylsäure, Acrylamid, Methacrylamid, Acrylnitril oder Methacrylnitril genannt, z.B. Homopolymere von Salzen der Acryl- und/ oder Methacrylsäure oder Copolymere aus wenigstens zwei

Acrylmonomeren untereinander oder Copolymere aus wenigstens einem Acrylmonomeren und Vinylpyrrolidon. Auch in der DE-A2-16 42 072 und der DE-A1-16 17 998 ist die Verwendung von vernetzten, wasserquellbaren Polymerisaten, auch als Hydrokolloide bezeichnet, auf dem Hygienesektor beschrieben. Neben Acrylamid-Polymerisaten werden dabei z.B. auch Polystyrol-Polymerisate erwähnt. Copolymerisate auf der Basis von z.B. 2-Methyl-2-acrylamido-propansulfonsäure (=MAPS) oder Vinylphosphonsäure-diethylester und Vinyl-N-methyl-acetamid oder Vinyl-formamid und Acrylamid oder Methacrylamid sind ebenfalls bereits als hervorragende Superabsorbentien vorgeschlagen worden (Deutsche Patentanmeldung P 31 24 454.8).

Bei der Herstellung von derartigen vernetzten, wasserquellbaren Polymerisaten werden dabei in der Regel als Vernetzer Divinylverbindungen verwendet, die meist zwei Acrylamid-Reste aufweisen, wie z.B. Methylenbisacrylamid (=MBA), Ethylenbisacrylamid (=EBA, 1,2-Bis-acrylamidoethan), Bis-(acrylamido-methyl/ether (=BAME), Bis-acrylamido-essigsäure (=BAE). Auch Bis-vinylphosphonsäureglykolester ist bereits als Vernetzer vorgeschlagen worden (Deutsche Patentanmeldung P 31 24 454.8). Die Herstellung der vernetzten, wasserquellbaren Polymerisate, z.B. durch radikalische oder Redoxpolymerisation, ist bekannt.

Überraschenderweise wurde jetzt gefunden, daß die Verbindungen der Formel I hervorragend als Vernetzer für Polymerisate, insbesondere wasserquellbare Polymerisate, geeignet sind.

Bei der Herstellung von wasserquellbaren, vernetzten Polymerisaten in an sich bekannter Weise werden bei der Verwendung von Verbindungen der Formel I als Vernetzer Polymerisate erhalten, die in ihren Eigenschaften den bisher bekannten Produkten, z.B. im Rückhaltevermögen, deutlich überlegen sind.

Die in der allgemeinen Formel für $R^1$, $R^2$ oder $R^3$ stehenden gleichen oder verschiedenen Alkylreste besitzen in der Regel 1 bis 6, insbesondere 1 bis 4, C-Atome. Vorzugsweise stehen die Reste $R^1$, $R^2$ und $R^3$ für Methyl, d.h. die Verwendung der Verbindung N-(2-Propenyl)-5,5-dimethyl-3-methylen-pyrrolidin-2-on ist besonders bevorzugt. Diese bekannte Verbindung kann leicht in vernünftigen Ausbeuten nach dem in Tetrahedron Letters Vol. 21, 119-120 (1980) beschriebenen Verfahren hergestellt werden. Die übrigen Verbindungen der allgemeinen Formel I können analog hergestellt werden.

Olefinische Monomere, die im Rahmen der vorliegenden Erfindung für die Herstellung von wasserquellbaren Polymerisaten geeignet sind, sind z.B.: Acryl- und Methacrylsäure und ihre Salze, wie Natrium-, Kalium- oder Ammonium-acrylat, Acrylamid, Methacrylamid, Acrylnitril, Vinylsulfonsäure, Styrolsulfonsäure, Vinylphosphonsäure, Vinylphosphonsäure-dimethyl-, -diethyl-, -dipropyl- und -dibutylester, 2-Methyl-2-acrylamido-propansulfonsäure-(1) und 2-Methyl-2-acrylamido-propanphosphonsäure-(1), N-Vinylformamid, N-Vinylacetamid, N-Vinyl-propionamid, N-Vinyl-N-methylformamid, N-Vinyl-N-methylacetamid, N-Vinyl-N-methylpropionamid, N-Vinyl-N-ethylformamid, N-Vinyl-N-ethylacetamid, N-Vinyl-N-ethyl-propionamid, N-Vinylpyrrolidon-2. Acrylsäure und ihre Salze sowie Acrylamid sind dabei insbesondere auch zur Herstellung von vernetzten, wasserquellbaren Homopolymerisaten geeignet, während die anderen Monomeren vor allem zur Herstellung von vernetzten, wasserquellbaren Copolymerisaten, insbesondere in Kombination mit Acrylamid und/oder Methacrylamid in Betracht kommen. Selbstverständlich können aber z.B. Acrylsäure und ihre Salze auch mit anderen olefinischen Monomeren, insbesondere Acrylamid, copolymerisiert werden.

Die Polymerisation (worunter auch im Nachfolgenden stets eine Homo- oder Co-polymerisation verstanden werden soll)

wird in Gegenwart einer oder mehrerer Verbindungen der Formel I durchgeführt, die als Vernetzer wirken. Die Konzentration der Verbindung oder Verbindungen der Formel I beträgt dabei 0,001 bis 2 Gewichts%, vorzugsweise 0,02 bis 0,5 Gewichts%, bezogen auf die übrigen Monomeren. Gegebenenfalls kann neben einer oder mehreren Verbindungen der Formel I auch noch eine oder mehrere andere als Vernetzer wirkende Verbindungen, wie z.B. Bis-acrylamidomethan, Bis-acrylamido-essigsäure, 1,1'-Bis-acrylamidodimethylether oder Bis-vinyl-phosphonsäureglycolester, Methylenbisacrylamid, Ethylenbisacrylamid, Bis-(acryl-amidomethyl)-ether vorhanden sein. Die Polymerisation wird im übrigen nach jedem beliebigen Verfahren, z.B. durch Lösungs-, Gel-, Emulsions-, Suspensions- oder Fällungs-Polymerisation, gegebenenfalls unter Schutzgasatmosphäre, wie Stickstoff, in an sich bekannter Weise durchgeführt. Die Polymerisation wird dabei wie üblich durch energiereiche Strahlung, durch radikalische oder Redox-Katalysatoren initiiert und bei 0 bis 130°C, bei Normaldruck oder gegebenenfalls unter Überdruck, vorzugsweise 10 bis 100°C, durchgeführt. Die Monomerenkonzentration beträgt normalerweise 15 bis 50 Gewichts%, vorzugsweise 20 bis 30 Gewichts%. Bei der Lösungspolymerisation können als Lösungsmittel z.B. Wasser oder Kohlenwasserstoffdestillate mit einem Siedepunkt von 250 bis 350°C, vorzugsweise 280 bis 320°C, und bei der Emulsionspolymerisation z.B. Mischungen von Wasser und diesen Kohlenwasserstoffdestillaten verwendet werden. Das vernetzte, wasserquellbare (Mono- oder Co-)Polymerisat wird nach beendeter Polymerisation wie üblich isoliert und gegebenenfalls getrocknet.

Sofern die zu polymerisierenden Monomeren verseifbare Gruppen enthalten, kann nach, zweckmäßigerweise aber während, der Polymerisation auch eine teilweise Hydrolyse durchgeführt werden. Hierzu wird der Monomerenmischung zusätzlich ein alkalisches Verseifungsmittel zugefügt. Als Verseifungsmittel kann prinzipiell jede wasserlösliche Base eingesetzt werden, deren Stärke für eine Reaktion mit den hydrolysierbaren Gruppen ausreicht, wie z.B. Alkali- und Erdalkalihydroxide, Alkali- oder Ammoniumsalze schwacher Säuren, die durch Hydrolyse $OH^{\ominus}$-Ionen generieren, Ammoniak oder stark basische aliphatische Amine. Zweckmäßigerweise werden als Verseifungsmittel Natrium- oder Kaliumhydroxid, Ammoniak, Natrium- oder Kaliumcarbonat, -hydrogencarbonat, -phosphat, -borat oder -acetat eingesetzt. Soll die Teilhydrolyse erst nach der Polymerisation erfolgen, so wird das Verseifungsmittel mit dem Polymerisat vermischt. Die Verseifung erfolgt daher - je nach Verfahrensweise - bereits während der normalerweise exotherm verlaüfenden Polymerisation oder durch weitere Wärmezufuhr im Anschluß an die Polymerisation. Auch eine Kombination beider Verfahrensweisen ist möglich.

Die Polymerisation wird häufig in Wasser durchgeführt. Hierzu werden die zu polymerisierenden Monomeren in Wasser gelöst, die Monomerenkonzentration beträgt dabei in der Regel 15 - 50 Gewichts%, vorzugsweise 20 - 30 Gew.%, vorhandene saure Gruppen, wie z.B. im Falle der Acrylsäure, werden durch Zugabe von Lauge, wie Natron- oder Kalilauge oder Ammoniak, in die Salzform überführt und die Polymerisation oder Copolymerisation wird in an sich bekannter Weise, z.B. durch Zugabe eines Katalysators, eingeleitet und bei Normal- oder Überdruck, gegebenenfalls unter Schutzgasatmosphäre, bei 0 bis 130°C, vorzugsweise 10 - 100°C, durchgeführt. Es werden so unter den Bedingungen der Lösungspolymerisation wasserunlösliche, aber stark in Wasser gequollene erfindungsgemäße Polymerisate erhalten, die durch Abdestillieren des Wassers oder Ausfällung durch Zusatz eines wassermischbaren organischen Lösungsmittels, wie Methanol, Ethanol, Aceton oder dergleichen, isoliert werden können.

Besonders wirksame erfindungsgemäße Polymerisate werden dabei erhalten, wenn man die Polymerisation in Wasser nach dem Verfahren der sogenannten Gelpolymerisation durchführt. Dabei werden 15 - 50 gewichts%ige, vorzugsweise 20 - 30 gewichts%ige, wäßrige Lösungen der Monomeren mit bekannten geeigneten Katalysatorsystemen und gegebenenfalls mit einem der genannten Verseifungsmittel ohne mechanische Durchmischung unter Ausnutzung des sogenannten Trommsdorff-Norrish-Effektes (Bios Final Rep. 363 22; Makromol. Chem. 1, 169 (1947)) polymerisiert. Auch hierbei wird die Polymerisationsreaktion im Temperaturbereich zwischen 0°C und 130°C, vorzugsweise zwischen 10°C und 100°C, sowohl bei Normaldruck bzw. unter erhöhtem Druck und gegebenenfalls unter Schutzgasatmosphäre, vorzugsweise unter Stickstoff, ausgeführt. Durch mehrstündiges Nachheizen der Polymerisatgele im Temperaturbereich von 50 - 130°C, vorzugsweise 70 - 100°C, können die Qualitätseigenschaften der Polymerisate noch verbessert werden. Die auf diesem Wege hergestellten, in Form wäßriger Gallerten vorliegenden erfindungsgemäßen Polymerisate können nach Entfernung des Wassers durch bekannte Trocknungsprozesse in fester Form erhalten und mit allgemein bekannten Mahlaggregaten in Pulverform überführt werden.

Die Herstellung der erfindungsgemäßen wasserquellbaren, vernetzten Polymerisate kann z.B. auch nach der Methode der Fällungspolymerisation in einem organischen Lösungsmittel, insbesondere in einem wasserlöslichen Alkanol, also in einem $C_1$- bis $C_4$-Alkohol, wie Methanol, Ethanol, Isopropanol, n-, sec- und iso-Butanol, vorzugsweise aber in tert.-Butanol durchgeführt werden. Der Wassergehalt der als Lösungsmittel eingesetzten niederen Alkanole sollte dabei 6 Gewichts% nicht überschreiten, da sonst eine Klumpenbildung bei der Polymerisation auftreten kann. Vorzugsweise wird bei einem Wassergehalt von 0 - 3 % gearbeitet. Die Menge des einzusetzenden Lösungsmittels richtet sich bis zu einem gewissen Grad nach der Art der eingesetzen Monomeren. In der Regel werden pro 100 g Gesamtmonomere 200 bis 1000 g des Lösungsmittels eingesetzt. Wie üblich kann die Polymerisation in einer Schutzgasatmosphäre, vorzugsweise unter Stickstoff, ausgeführt werden. Die Polymerisationstemperatur liegt zwischen 20 und 120°C, vorzugsweise 40 bis 80°C. Bei der Durchführung der Polymerisation in den genannten organischen Lösungsmitteln, vorzugsweise in tert.-Butanol, unter den Bedingungen der Fällungspolymerisation, fällt das Polymerisat direkt in fester Form an und kann durch Abdestillieren des Lösungsmittels oder Absaugen und Trocknen isoliert werden. Das so hergestellte vernetzte Copolymerisat kann auch vor der Isolierung durch Zusatz von oben angegebenen Verseifungsmitteln, vorzugsweise von NaOH oder KOH, in Suspension bei Raumtemperatur oder erhöhter Temperatur teilhydrolysiert werden.

Wie allgemein üblich, werden zur Auslösung der Polymerisationen energiereiche elektromagnetische Strahlen oder chemische Polymerisationsinitiatoren herangezogen, z.B. organische Peroxide, wie Benzoylperoxid, tert.Butylhydroperoxid, Methyl-ethyl-keton-peroxid, Cumol-hydroperoxid, Azoverbindungen, wie Azo-di-iso-butyro-nitril, sowie anorganische Peroxyverbindungen wie $(NH_4)_2S_2O_8$ oder $K_2S_2O_8$ oder $H_2O_2$ gegebenenfalls in Kombination mit Reduktionsmitteln, wie Natriumhydrogensulfit, oder Redoxsysteme, welche als reduzierende Komponente eine aliphatische und aromatische Sulfinsäure, wie Benzolsulfinsäure und Toluolsulfinsäure oder Derivate dieser Säuren enthalten, wie z.B. Mannichaddukte aus Sulfinsäure, Aldehyden und Aminoverbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Die erfindungsgemäß hergestellten vernetzten, wasserquellbaren Mono- oder Co-Polymerisate besitzen schematisch vermutlich folgende Struktur

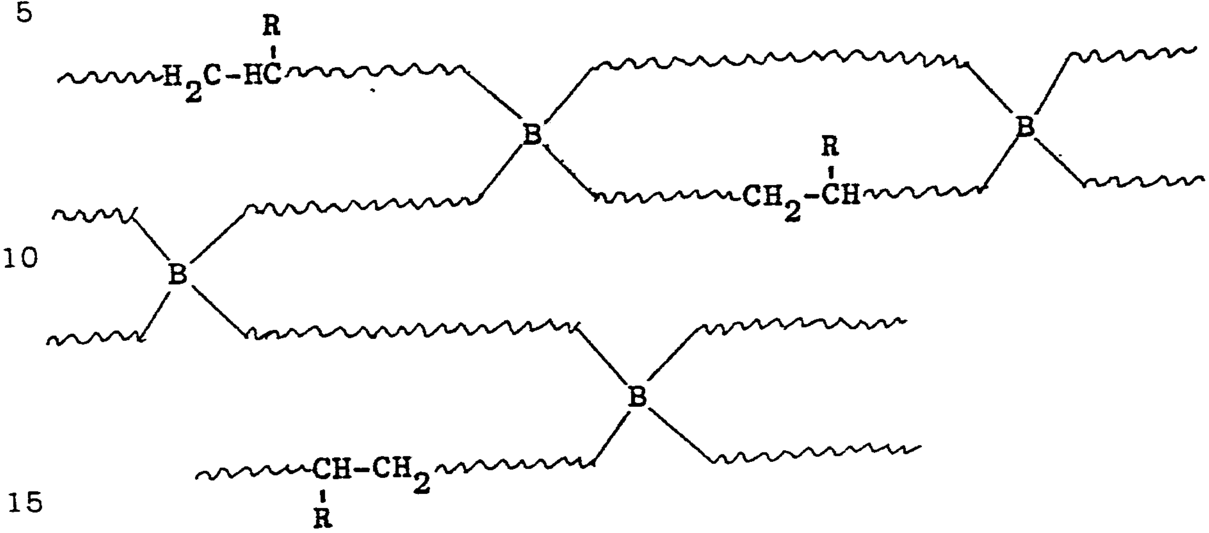

worin die Zickzacklinien die Hauptpolymerenstränge oder die Grundketten und B vernetzende Brückenglieder darstellen, denen wahrscheinlich die allgemeine Formel Ia,

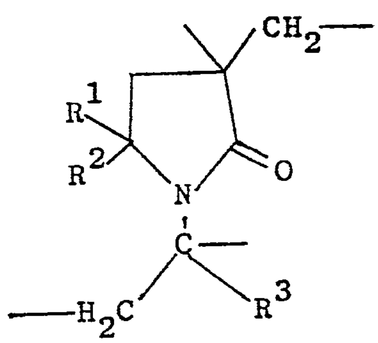

(Ia)

worin $R^1$, $R^2$ und $R^3$ die bereits genannten Bedeutungen besitzen, zukommt. Die Hauptpolymerenstränge oder Grundketten enthalten dabei Seitenketten oder Seitenreste -R, wie z.B. $-CONH_2$, -COONa, $-SO_3Na$, -NCHO, $-PO(OC_2H_5)_2$, $-N(CH_3)COCH_3$. Im Fall von Copolymerisaten sind die verschiedenartigen Monomereneinheiten innerhalb der Hauptpolymerenstränge normalerweise in statistischer Verteilung angeordnet.

Die erfindungsgemäßen, einen oder mehrere Verbindungen de Formel I bzw. Reste der Formel Ia enthaltenden,vernetzter

wasserquellbaren Homo- oder Co-Polymerisate besitzen gegenüber den jeweiligen Vergleichsprodukten, die mit den bisher üblichen Vernetzern erhalten wurden, deutlich bessere Eigenschaften, insbesondere ein deutlich besseres Quellvermögen und damit auch ein besseres Flüssigkeitsrückhaltevermögen. Sie binden daher pro Gewichtseinheit mehr Flüssigkeit als bisher bekannte oder vorgeschlagene vergleichbare Produkte und sind daher als saugfähige Substanzen (sogenannte Superabsorbentien) z.B. in Hygieneartikeln, wie Windeln, Damenbinden, Tampons, Papiertaschentüchern etc. den bisher benutzten Produkten überlegen und zeichnen sich durch hohes Saugvermögen für physiologische und elektrolythaltige Flüssigkeiten, wie z.B. Blut, Harn, Schweiß etc. aus. Besonders günstig verhalten sich dabei Homopolymerisate der Acrylsäure, die vor Beginn der Polymerisation mit Natron- und/oder Kalilauge oder Ammoniak neutralisiert worden ist, sowie Copolymerisate von Acrylsäure und Acrylamid im Gewichtsverhältnis (20 bis 80) : (80 bis 20), wobei die Acrylsäure auch hier vor Beginn der Polymerisation mit den vorstehend angegebenen Basen neutralisiert worden ist.

Das erfindungsgemäße vernetzte, wasserquellbare Polyacrylat enthält daher in den Hauptpolymerensträngen Einheiten der Struktur

$$-CH_2-\underset{COO^{\ominus}X^{\oplus}}{CH_2}- \qquad (II)$$

worin $X^{\oplus}$ ein Kation bedeutet, insbesondere $Na^{\oplus}$ oder $K^{\oplus}$, und das erfindungsgemäß vernetzte Copolymerisat von Acrylsäure und Acrylamid im Gewichtsverhältnis (20 bis 80) : (80 bis 20) enthält in den Hauptpolymerensträngen Einheiten der Strukturen

$$-CH_2-\underset{COO^{\ominus}X^{\oplus}}{CH_2}- \quad (II) \qquad \text{und} \qquad -CH_2-\underset{CONH_2}{CH_2}- \quad (III)$$

wobei bei dem Copolymerisat die Einheiten der Strukturen II und III im Rahmen des gesamten Gewichtsverhältnisses

statistisch in den Hauptpolymerensträngen angeordnet sind. $X^{\oplus}$ kann auch ein Proton und insbesondere auch ein Kation der Formel $HNR_3^{9\oplus}$ sein, wobei die 3 Reste $R^9$ gleich oder verschieden sind und Wasserstoff, Alkyl mit 2 bis 4 C-Atomen, Hydroxyethyl oder Hydroxypropyl bedeuten. Ganz besonders günstig verhalten sich dabei Copolymerisate, die in den Grundketten in statistischer Verteilung zu

0 bis 60 Gew.% aus Resten der Formel IV

$-CH_2-CH-$
$\quad\quad\quad R^4$ (IV)

0 bis 40 Gew.% aus Resten der Formel V

$-CH_2-CH-$
$\quad\quad\quad N-R^5$ (V)
$\quad\quad\quad COR^6$

und 10 bis 95 Gew.% aus Resten der Formel VI

$-CH_2-CR^7$
$\quad\quad\quad CO$ (VI)
$\quad\quad\quad NH_2$

bestehen, wobei die Summe der Anteile der Reste der Formeln IV und V 5 bis 90 Gew.% beträgt,und die zusätzlich 0,001 bis 2 Gew.%, bezogen auf das Gesamtgewicht der Grundkettenbestandteile, vernetzende Brückenglieder der Formel Ia enthalten, wobei in der Formel Ia $R^1$, $R^2$ und $R^3$ die bereits genannten Bedeutungen, vorzugsweise die Bedeutung Methyl, besitzen und

worin $R^4$ einen Rest der Formeln $-CONH-C(CH_3)_2-CH_2-SO_3^{\ominus}X^{\oplus}$, $-CO-NH-C(CH_3)_2-CH_2-PO_3^{\ominus\ominus}X_2^{\oplus}$, $-SO_3^{\ominus}X^{\oplus}$, $-PO_3^{\ominus\ominus}X_2^{\oplus}$

oder $-\overset{O}{\overset{\|}{P}}(OR^8)_2$ bedeutet, $R^5$ und $R^6$ gleich oder verschieden sind und für Wasserstoff, Methyl, Ethyl oder gemeinsam für Trimethylen stehen, $R^7$ Wasserstoff oder Methyl, $R^8$ Alkyl mit 1 bis 4 C-Atomen und $X^{\oplus}$ ein Kation bedeuten. Diese Copolymerisate sind im Rahmen der vorliegenden Erfindung bevorzugt. Hervorragend geeignet sind auch Partialhydrolysate der bevorzugten Copolymerisate, in denen ein Anteil von bis zu 60 % der ursprünglich vorhandenen Gruppen der Formel V zu Gruppen der Formel II

$$\begin{array}{l}-CH_2-CH- \\ \qquad\quad | \\ \qquad\quad COO^{\ominus}X^{\oplus}\end{array} \qquad (II)$$

hydrolysiert worden ist, wobei die Produkte insgesamt 10 bis 90 Gew.% anionische Reste aufweisende Gruppen der Formeln II und IV enthalten.

Vorzugsweise bestehen bei den bevorzugten wasserquellbaren, vernetzten Copolymerisaten die Grundketten in statistischer Verteilung zu 0 bis 50 Gew.% aus Resten der Formel IV, zu 0 bis 30 Gew.% aus Resten der Formel V und zu 20 bis 95 Gew.% aus Resten der Formel VI. Die bevorzugten Copolymerisate enthalten vorzugsweise bezogen auf das Gesamtgewicht der Grundkettenbestandteile 0,02 bis 0,5 Gew.% vernetzende Brückenglieder der Formel Ia.

Das Kation $X^{\oplus}$ kann ein Proton sein oder sich von jeder wasserlöslichen bekannten Base ableiten, deren Stärke ausreicht, die Sulfo- und Carboxylgruppen zu neutralisieren und die die Wasserquellbarkeit der Copolymeren nicht beeinträchtigt. Die Auswahl kann somit in einfacher Weise erfolgen. Zweckmäßigerweise bedeutet jedoch $X^{\oplus}$ ein Proton oder ein Alkalikation, insbesondere ein Natrium- oder Kaliumkation, oder ein Kation der Formel $HN^{\oplus}R^9_3$, wobei die drei Reste $R^9$, wie bereits erwähnt, gleich oder verschieden sind und für Wasserstoff, Alkyl mit 1 bis 4 C-Atomen, Hydroxyethyl oder Hydroxypropyl stehen.

Besonders bevorzugte erfindungsgemäße Copolymerisate bestehen in den Grundketten in statistischer Verteilung zu 0 bis 50 Gew.% aus Resten der Formel IV, 0 bis 30 Gew. % aus Resten der Formel V und zu 20 bis 95 Gew.% aus Resten der Formel VI bzw. deren Hydrolyseprodukten. Bevorzugt sind auch solche erfindungsgemäßen Copolymerisate, in denen $R^7$ Wasserstoff ist. Insbesondere enthalten die bevorzugten erfindungsgemäßen vernetzten Copolymerisate, bezogen auf das Gesamtgewicht der Grundkettenbestandteile, 0,02 bis 0,5 Gew.% Reste der Formel Ia.

Besonders bevorzugte erfindungsgemäße Copolymerisate enthalten Reste der Formel IV, in denen $R^4$ den Rest

$-CO-NH-C(CH_3)_2-CH_2-SO_3^{\ominus}\ Na^{\oplus}$ und/oder

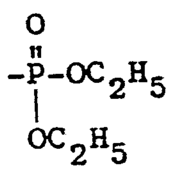 und/ oder 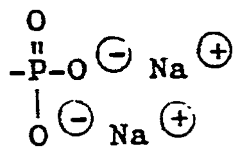 ,

bedeutet, und/oder Reste der Formel V mit $R^5 = R^6 = H$ oder $R^5 = R^6 = CH_3$ oder $R^5 = H$, $R^6 = CH_3$.

In den durch Partialhydrolyse der bevorzugten erfindungsgemäßen Copolymerisate erhältlichen Derivaten ist ein Anteil von bis zu 60 %, vorzugsweise 10 - 40 %, der ursprünglich vorhandenen Reste der Formel VI durch Reste der Formel II ersetzt. Zweckmäßigerweise wird im Rahmen dieses Bereichs der Hydrolysegrad umso höher gewählt, je geringer der Sulfonsäure- bzw. Phosphonsäure-Gehalt im Copolymeren ist und umgekehrt. Insbesondere enthalten Partialhydrolysate der bevorzugten erfindungsgemäßen Copolymerisate insgesamt 20 bis 80 Gew.% von Gruppen der Formeln II und IV. Selbstverständlich können in einem Copolymerisat die Reste $R^4$ bis $R^9$, $X^{\oplus}$ verschiedene Bedeutungen haben.

Das sehr gute Absorptionsvermögen für physiologische und elektrolythaltige Flüssigkeiten der bevorzugten erfindungsgemäßen Copolymerisate und ihrer Partialhydrolysate wird in vielen Fällen durch Anwesenheit von Borat-Anionen noch weiter erhöht. Derartige Borat-Anionen enthaltende Copolymerisate und ihre Partialhydrolysate weisen in der Regel, berechnet als $H_3BO_3$, 2,5 bis 35 Gew.%, vorzugsweise 5 bis 25 Gew.%, Borat-Anionen auf bezogen auf das Gewicht des unverseiften Polymeren.

Die bevorzugten erfindungsgemäßen wasserquellbaren, vernetzten Copolymerisate werden erhalten, indem man 0 bis 60 Gewichtsteile einer Vinylverbindung der Formel IVa

$$CH_2=CH-R^4 \qquad (IVa)$$

in Wasser löst, sofern sie Sulfo- oder Phosphonsäuregruppen enthält, neutralisiert, danach 0 bis 40 Gewichtsteile einer Vinylverbindung der Formel Va

$$CH_2=CH-N(R^5)-CO-R^6 \qquad (Va)$$

und 10 bis 95 Gewichtsteile Acrylamid und/oder Methacrylamid zusetzt, wobei die Gesamtmenge der Vinylverbindungen der Formeln IVa und Va 5 bis 95 Gewichtsteile und die Gesamtmenge von Acrylamid und/oder Methacrylamid und den Vinylverbindungen der Formeln IVa und Va 100 Gewichtsteile beträgt, zusätzlich 0,001 bis 2 Gewichtsteile eines oder mehrerer Vernetzer der Formel I zufügt, wobei $R^4$, $R^5$, $R^6$ und $X^{\oplus}$ die oben genannten Bedeutungen haben, und die Copolymerisation in an sich bekannter Weise einleitet und bei 0 bis 130°C, vorzugsweise 10 - 100°C durchführt.

Auch die bevorzugten Copolymerisate können nach allen bekannten Polymerisationsverfahren, wie Lösungs-, Gel-, Suspensions-, Emulsions-, Fällungspolymerisationsverfahren, hergestellt werden. Eine gewünschte Teilhydrolyse wird wie bereits beschrieben durchgeführt.

Die in vielen Fällen vorteilhaften, Borat-Anionen enthaltenden bevorzugten Produkte können auf einfache Weise erhalten werden, indem Natrium- oder Kaliumsalze der Borsäure (Ortho-, Meta- oder Polyborate bzw. Borsäure zusammen mit NaOH oder KOH) als Verseifungsmittel eingesetzt werden. Bei der Teilhydrolyse ist es nicht unbedingt erforderlich, wenn auch in der Regel üblich, eine zur Menge der zu verseifenden Gruppen äquivalente Menge des Verseifungsmittels einzusetzen. Einerseits wird bei der Verseifung $NH_3$ frei, welches seinerseits die Verseifung weiterer Amidgruppen katalysieren kann, andererseits reicht der pH-Wert des aus Carboxylgruppen und Carboxylatgruppen des Copolymeren gebildeten Puffersystems ebenfalls zur weiteren Verseifung von Amidgruppierungen aus.

Besonders bevorzugte erfindungsgemäße Copolymerisate werden erhalten, wenn man unter den oben angegebenen Voraussetzungen 0 bis 50 Gewichtsteile Vinylverbindungen der Formel IV a, 0 bis 30 Gewichtsteile Vinylverbindungen der Formel Va und 10 bis 95 Gewichtsteile Acrylamid und/oder Methacrylamid einsetzt.

Besonders bevorzugte erfindungsgemäße Produkte werden auch erhalten, wenn man 0,02 bis 0,5 Gewichtsteile von Vernetzern der Formel I einsetzt.

Besonders vorteilhafte teilhydrolysierte bevorzugte erfindungsgemäße Copolymerisate werden erhalten, wenn soviel anionische Gruppen enthaltende Vinylverbindungen der Formel IVa eingesetzt und die Hydolyse so weit geführt wird, daß die Produkte insgesamt 20 bis 80 Gew.% anionische Reste aufweisende Gruppen der Formeln II und IV enthalten.

Als Verbindungen der Formel IVa kommen in Betracht: Vinylsulfonsäure, Vinylphosphonsäure, Vinylphosphonsäure-dimethyl-, -diethyl-, -dipropyl- und -dibutylester, 2-Methyl-2-acrylamido-propansulfonsäure-(1) und 2-Methyl-2-acrylami-

do-propanphosphonsäure-(1), und als Verbindungen der Formel Va: N-Vinylformamid, N-Vinylacetamid, N-Vinyl-propionamid, N-Vinyl-N-methylformamid, N-Vinyl-N-methylacetamid, N-Vinyl-N-methylpropionamid, N-Vinyl-N-ethyl-formamid, N-Vinyl-N-ethylacetamid, N-Vinyl-N-ethyl-propionamid, N-Vinylpyrrolidon.

Für den Aufbau der Grundketten werden neben Acrylamid und gegebenenfalls Methacrylamid,vorzugsweise 2-Methyl-2-acrylamido-propansulfonsäure, Vinylphosphonsäure, Vinylphosphonsäurediethylester, Vinylformamid, Vinylacetamid, Vinylmethylacetamid und Vinylpyrrolidon,als Vernetzer-Komponente vorzugsweise N-(2-Propenyl)-5,5-dimethyl-2-methylen-pyrrolidin-2-on,eingesetzt.

Bei den nachfolgenden Beispielen betreffen jeweils die mit a bezeichneten die Herstellung von Polymerisaten unter der erfindungsgemäßen Verwendung von Verbindungen der Formel I als Vernetzer und die mit b bezeichneten die Herstellung von Vergleichspolymerisaten. Prozente sind, sofern nichts anderes angegeben, Gewichtsprozente.

In den Beispielen und in der Tabelle 1 werden folgende Abkürzungen benutzt:

| | |
|---|---|
| ABAH: | 2,2-Azo-bis(2-amidopropan)dihydrochlorid |
| ABN: | Azo-bis-isobutyronitril |
| AM: | Acrylamid |
| APS: | Ammoniumpersulfat |
| BAE: | Bis-acrylamidoessigsäure |
| BAME: | Bis-(acrylamidomethyl)ether |
| BVPG: | Bis-(vinylphosphonsäure)glycolester |
| EBA: | Ethylen-bis-acrylamid=1,2-Bis-(acrylamido)ethan |
| KPS: | Kaliumpersulfat |
| MAM: | Methacrylamid |
| MAPS: | 2-Methyl-2-acrylamido-propansulfonsäure |
| MBA: | Methylen-bis-(acrylamid) |
| Na-VS: | Natrium-vinylsulfonat |

PMP: N-(2'-propenyl)-5,5-dimethyl-3-methylenpyrrolidin-2-on

ViFA: Vinylformamid

ViPDi: Vinylphosphonsäure-diethylester

ViMA: N-Vinyl-N-methylacetamid

ViPy: N-Vinylpyrrolidon-2

Beispiel 1a

In einem Polymerisationskolben von 2 l Inhalt, ausgestattet mit Planschliffdeckel, Rührer, Thermometer und Gaseinleitungsrohr werden zu 222,2 g 50%iger Natronlauge in 341,8 g entionisiertem Wasser unter Außenkühlung 200 g Acrylsäure langsam zugetropft, wobei die Innentemperatur unter 35°C gehalten wird. Nach Abkühlen auf 20°C werden 0,02 g PMP zugesetzt und unter Rühren und Einleiten von Stickstoff innerhalb von 30 Minuten gelöst. Nun gibt man 120 mg APS - gelöst in 5 ml Wasser - zu und läßt unter Stickstoffeinleitung noch 3 Minuten bei erhöhter Drehzahl rühren. Dann werden Einleitungsrohr und Rührer hochgezogen. Nach einer Induktionszeit von ca. 30 Minuten setzt die Polymerisation ein, wobei die Innentemperatur auf 80 bis 85°C ansteigt und die Lösung in ein formstabiles Gel übergeht. Das Polymerisat wird zerkleinert, getrocknet und durch Mahlung auf die gewünschte Korngröße gebracht.

Beispiel 1b

Nach der gleichen Vorschrift wie im Beispiel 1a wird ein Na-polyacrylat hergestellt, jedoch mit 0,1 g BVPG anstelle von PMP als Vernetzter.

Beispiel 2a:

In einem Polymerisationskolben von 2 l Inhalt, ausgestattet mit Rührer, Rückflußkühler, Tropftrichter, Gaseinleitungsrohr und elektrisch beheiztem Wasserbad werden 1200 l tert. Butanol vorgelegt und darin 60 g MAPS unter Rühren suspendiert, dann werden 6,6 l $NH_3$-Gas eingeleitet und anschließend 130 g Acrylamid, 10 g ViMA und 0,2 g PMP zugegeben. Unter Einleiten von Stickstoff wird mit dem elektrischen Wasserbad das Reaktionsgemisch auf 50°C geheizt und 500 mg ABN zugesetzt. Nach einer Induktionszeit von ca. 2 Stunden setzt die Polymerisation ein, die Reaktionstemperatur steigt bis auf ca. 70°C an, und das Polymerisat fällt aus. Es wird noch 2 Stunden bei 80°C nachgeheizt, wobei eine dickflüssige Suspension entsteht. Das Polymere kann durch Absaugen und Trocknen unter Vakuum bei 50°C isoliert werden. Es kann jedoch auch das Lösungsmittel direkt unter vermindertem Druck aus dem Reaktionsgemisch abdestilliert werden, wodurch das Polymere in Form eines weißen Pulvers erhalten wird.

Beispiel 2b

Nach der gleichen Vorschrift wie im Beispiel 2a wird ein Copolymerisat hergestellt, jedoch mit 0,4 g MBA anstelle von PMP als Vernetzer.

Beispiel 3a

In einem Emulgierkolben von 2 l Inhalt mit gut wirkendem Rührer, Gaseinleitungsrohr und Bodenventil, der über einem Polymerisationskolben angeordnet ist, wird unter Stickstoff eine Emulsion folgender Zusammensetzung hergestellt: 400 ml einer Erdölfraktion mit einem Siedebereich von 200 bis 240°C, 350 ml entionisiertes Wasser, 20 g eines Emulgators auf der Basis von Nonylphenol-polyglykolether, 135 g AM, 50 g Na-VS, 15 g MAPS, 4 g NaOH und 0,1 g PMP. Im Polymerisationskolben, ausgestattet mit Rührer, Rückflußkühler, Tropftrichter, Gaseinleitungsrohr, elektrisch beheiztem Wasserbad und Einleitungsrohr vom Emulgierkolben, werden ca. 20 % der Emulsion vorgelegt. Unter Einleitung von Stickstoff und Rühren wird auf 60°C geheizt. Dann werden durch den Tropftrichter 20 % einer Lösung von 500 mg ABAH (Fa. Otsuka Chemical Co. Ltd., Japan) in 50 ml entionisiertem Wasser zugesetzt. Die Polymerisation beginnt nach etwa 30 Minuten unter deutlichem Temperaturanstieg auf ca. 80°C. Die restliche Emulsion

wird gleichmäßig zusammen mit der verbliebenen Katalysatorlösung in 2 Stunden zugetropft. Danach wird noch 1 Stunde bei 70°C nachgeheizt. Es resultiert eine Dispersion des Polymerisats im organischen Lösungsmittel, aus der das Produkt wie im Beispiel 2 isoliert wird.

Beispiel 3b

Nach der gleichen Vorschrift wie im Beispiel 3a wird ein Copolymerisat hergestellt, jedoch mit 0,2 g BAE anstelle von PMP als Vernetzer.

Gemäß den vorstehenden Beispielen können auch die Polymerisate der Tabelle 1 hergestellt werden.

Tabelle 1

| Nr. | Monomerenzusammensetzung in % | Vernetzer in % der übrigen Monomeren | Weitere Zusätze in % der Monomeren | Base | Katalysator | lt. Beispiel |
|---|---|---|---|---|---|---|
| 4a | 5 ViMA, 95 AM | 0,05 PMP | 13 $K_2CO_3$ | - | ABAH | 3 |
| 4b | 5 ViMA, 95 AM | 0,1 BAME | 13 $K_2CO_3$ | - | ABAH | 3 |
| 5a | 5 ViPDi, 5 MAPS, 90 AM | 0,02 PMP | 13 $K_2CO_3$ | NaOH | KPS | 1 |
| 5b | 5 ViPDi, 5 MAPS, 90 AM | 0,025 MBA | 13 $K_2CO_3$ | NaOH | KPS | 1 |
| 6a | 5 ViPDi, 5 MAPS, 90 AM | 0,1 PMP | 13 $K_2CO_3$ | NaOH | ABN | 2 |
| 6b | 5 ViPDi, 5 MAPS, 90 AM | 0,1 BVPG | 13 $K_2CO_3$ | NaOH | ABN | 2 |
| 7a | 5 ViPDi, 5 MAPS, 90 AM | 0,02 PMP | 13 $K_2CO_3$ | NaOH | ABAH | 3 |
| 7b | 5 ViPDi, 5 MAPS, 90 AM | 0,05 BVPG | 13 $K_2CO_3$ | NaOH | ABAH | 3 |
| 8a | 5 ViPDi, 5 MAPS, 90 AM | 0,01 PMP | 13 $K_2CO_3$ | NaOH | APS | 1 |
| 8b | 5 ViPDi, 5 MAPS, 90 AM | 0,025 BVPG | 13 $K_2CO_3$ | NaOH | APS | 1 |
| 9a | 20 MAPS, 10 ViMA, 70 AM | 0,02 PMP | 4,3 Na-Borat | NaOH | APS | 1 |
| 9b | 20 MAPS, 10 ViMA, 70 AM | 0,05 MBA | 4,3 Na-Borat | NaOH | APS | 1 |
| 10a | 20 ViMA, 80 AM | 0,03 PMP | 13,3 Na-Borat | NaOH | APS | 1 |
| 10b | 20 ViMA, 80 AM | 0,05 BVPG | 13,3 Na-Borat | NaOH | APS | 1 |

Tabelle 1

| Nr. | Monomerenzusammensetzung in % | Vernetzer in % der übrigen Monomeren | Weitere Zusätze in % der Monomeren | Base | Katalysator | lt. Beispiel |
|---|---|---|---|---|---|---|
| 11a | 25 MAPS, 5 ViMA, 70 AM | 0,05 PMP | - | NaOH | ABAH | 3 |
| 11b | 25 MAPS, 5 ViMA, 70 AM | 0,1 BVPG | - | NaOH | ABAH | 3 |
| 12a | 10 ViMA, 90 AM | 0,05 PMP | 13 $K_2CO_3$ | - | APS | 1 |
| 12b | 10 ViMA, 90 AM | 0,05 MBA | 13 $K_2CO_3$ | - | APS | 1 |
| 13a | 5 ViFA, 95 AM | 0,2 PMP | 13 $K_2CO_3$ | - | ABN | 2 |
| 13b | 5 ViFA, 95 AM | 0,2 MBA | 13 $K_2CO_3$ | - | ABN | 2 |
| 14a | 20 MAPS, 10 ViMA, 70 MAM | 0,05 PMP | 4,3 Na-Borat | NaOH | APS | 1 |
| 14b | 20 MAPS, 10 ViMA, 70 MAM | 0,05 EBA | 4,3 Na-Borat | NaOH | APS | 1 |

Die in der vorstehenden Tabelle vor den Verbindungsbezeichnungen angegebenen Zahlen bedeuten Gewichtsprozente. Die in der Tabelle in der b-Reihe angegebenen Copolymerisate sind solche der Deutschen Patentanmeldung P 31 24 454.8.

Beispiel 15a

In einem Polymerisationskolben von 2 l Inhalt, ausgestattet mit Planschliffdeckel, Rührer, Thermometer und Gaseinleitungsrohr werden zu 111,1 g 50%iger Natronlauge in 339,7 g entionisiertem Wasser unter Außenkühlung 100 g Acrylsäure langsam zugetropft, wobei die Innentemperatur unter 35°C gehalten wird. Nach Abkühlen auf 20°C werden 203,3 g einer 49,2gewichtsprozentigen AM-Lösung sowie 0,1 g PMP zugesetzt. Man leitet in die Lösung unter Rühren Stickstoff ein und gibt nach 30 Minuten 120 mg APS - gelöst in 5 ml Wasser - zu. Es wird noch 3 Minuten unter Rühren Stickstoff eingeleitet, dann werden Einleitungsrohr und Rührer hochgezogen. Nach einer Induktionszeit von 3 - 5 Minuten setzt die Polymerisation ein, wobei die Innentemperatur auf 80 bis 85°C ansteigt und die Lösung in ein formstabiles Gel übergeht. Das Polymerisat wird zerkleinert, getrocknet und durch Mahlung auf die gewünschte Korngröße gebracht.

Beispiel 15b

Nach der gleichen Vorschrift wie in Beispiel 15a wird ein Copolymerisat aus AS-Na und AM hergestellt, jedoch mit BAE als Vernetzer.

Die Ausprüfung der erfindungsgemäßen Copolymeren im Hinblick auf ihre flüssigkeitsabsorbierende Wirkung in Hygieneartikeln erfolgt nach einer Schleudermethode mit Hilfe von Saugkörpern in Form von Monatsbinden.

Zur Herstellung der Prüfkörper wird von käuflichen Binden die Umhüllung entfernt und das Flockenkissen so gekürzt, daß es ein Gewicht von 5,0 g aufweist. Dann wird das Flokkenkissen mit einer Breite von ca. 6 cm und einer Länge von ca. 14 cm in der Dicke vorsichtig halbiert,und beide Hälften werden auseinandergeklappt. Anschließend werden 0,5 g Wirksubstanz (WS) des zu untersuchenden Copolymeren in Granulatform auf eine Hälfte aufgebracht. Dazu verwendet man eine Schablone, so daß das Polymer auf einer Fläche von 4 x 8 cm zu liegen kommt. Dann klappt man die andere Hälfte des Kissens zurück und wickelt den Bindenkörper in einen siegelfähigen Vlies der Abmessung 20 x 20 cm neu ein, verschweißt die offenen Enden durch Einwirkung von Wärmeenergie und schneidet das überstehende Vlies ab. Auf diese Weise erhält man Prüfkörper, die sowohl hinsichtlich ihrer Form als auch ihrer Zusammensetzung einer verkürzten Binde entsprechen. Auf die gleiche Weise werden Prüfkörper ohne Copolymer-Zusatz hergestellt. Die Prüfkörper werden anschließend gewogen, dann 30 Minuten bzw. 3 Stunden in einer mit Prüfflüssigkeit gefüllten Schale so eingetaucht, daß sie sich ohne Behinderung vollsaugen können.

Als Prüflösung werden eine Blutersatzflüssigkeit (BE), bestehend aus 1%iger Kochsalzlösung, der noch Glycerin, Natriumbicarbonat und etwas Hydroxyethylcellulose einer mittleren Viskosität von 20 mPa.s zugegeben wurden, verwendet, oder eine Harnersatzflüssigkeit (HE); bei dieser handelt es sich ebenfalls um eine 1%ige Kochsalzlösung, die als weitere Bestandteile Harnstoff, sek. Ammoniumphosphat, Kaliumsulfat und Zitronensäure enthält.

Nach der vorgegebenen Eintauchzeit werden die Prüfkörper durch kurzzeitiges Abschleudern von der nicht gebundenen Flüssigkeit befreit. Hierzu benutzt man eine marktgängige Wäscheschleuder mit einem Trommeldurchmesser von 23 cm und einer Umdrehungszahl von 1400 U/min. Die Prüfkörper legt man an die Innenwand der Trommel und schleudert sie 20 Sekunden lang mit maximal 250-facher Erdbeschleunigung. (Die Zeit ist gerechnet vom Einschalten der Schleuder bis zum Abschalten und beinhaltet die Anlaufzeit bis zur Erreichung der vollen Tourenzahl). Anschließend werden die Prüfkörper wieder gewogen.

Zur besseren Vergleichbarkeit errechnet man das Rückhaltevermögen von einem Gramm Polymerisat wie folgt:

Rückhaltevermögen BE (HE) = (Gewicht des abgeschleuderten Saugkörpers mit Polymer - Gewicht des abgeschleuderten Saugkörpers ohne Polymer) x 2.

Das Ergebnis wird somit angegeben in (g Blutersatz/g WS-Polymer) oder (g Harnersatz/g WS-Polymer).

In der folgenden Tabelle 2 sind die Ergebnisse der Ausprüfungen im Hinblick auf Rückhaltevermögen von Blutersatz- und Harnersatzlösung aufgeführt.

Zum weiteren Vergleich ist auch ein handelsübliches hydrophiles synthetisches Polymerisat auf der Basis von Polyacrylat unter der Nr. 20 mitgetestet worden.

Tabelle 2

| Eingesetztes Copolymerisat aus Herstellungsbeispiel Nr. | Rückhaltevermögen Blutersatzflüssigkeit (g BE/g WS Polymer) nach Eintauchzeiten von | | | | Rückhaltevermögen Harnersatzflüssigkeit (g HE/g WS Polymer) nach Eintauchzeiten von | | | |
|---|---|---|---|---|---|---|---|---|
| | 30 Minuten | | 3 Stunden | | 30 Minuten | | 3 Stunden | |
| | Beispiel a | Beispiel b | Beispiel a | Beispiel b | Beispiel a | Beispiel b | Beispiel a | Beispiel b |
| 1 | 30,5 | 24,3 | 43,6 | 29,7 | 35,6 | 28,7 | 43,4 | 40,3 |
| 2 | 30,8 | 30,1 | 45,6 | 41,3 | 29,3 | 26,2 | 40,5 | 38,4 |
| 3 | 28,3 | 26,5 | 39,7 | 35,0 | 33,6 | 28,9 | 44,3 | 41,5 |
| 4 | 37,4 | 34,1 | 46,3 | 43,2 | 30,7 | 25,0 | 35,6 | 30,1 |
| 5 | 39,6 | 34,9 | 50,2 | 48,7 | 45,5 | 39,5 | 54,3 | 49,7 |
| 6 | 31,3 | 21,6 | 45,2 | 40,9 | 37,8 | 26,1 | 55,0 | 58,0 |
| 7 | 34,3 | 30,1 | 43,6 | 39,5 | 34,6 | 26,9 | 56,3 | 54,0 |
| 8 | 30,7 | 27,7 | 44,5 | 41,5 | 40,5 | 24,3 | 49,3 | 44,5 |
| 9 | 28,5 | 22,9 | 42,3 | 39,4 | 45,4 | 39,5 | 50,1 | 40,8 |
| 10 | 35,3 | 28,8 | 50,6 | 52,8 | 48,6 | 33,5 | 77,3 | 76,9 |
| 15 | 33,4 | 29,8 | 45,6 | 38,7 | 42,8 | 37,6 | 53,6 | 48,1 |
| 20 Vergleich | - | 23,7 | - | 29,8 | - | 26,1 | - | 36,5 |

Ähnlich vorteilhafte Effekte gegenüber den jeweiligen Vergleichsprodukten der b-Reihe werden mit den übrigen in Tabelle 1 angegebenen erfindungsgemäßen vernetzten Polymerisaten der a-Reihe erzielt.

Patentansprüche

1. Verwendung von N-(2'alkenyl)-3-methylenpyrrolidin-2-on der allgemeinen Formel I

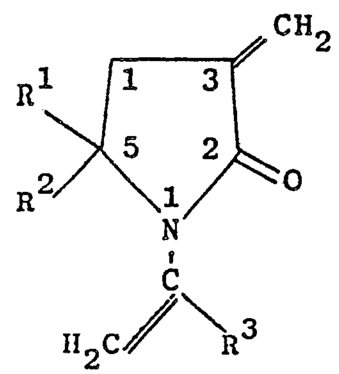

(I)

worin $R^1$, $R^2$, $R^3$ gleich oder verschieden sind und Wasserstoff oder Alkyl bedeuten, als Vernetzer für Polymerisate.

2. Verwendung von N-(2'alkenyl)-3-methylenpyrrolidin-2-on der allgemeinen Formel I nach Anspruch 1 als Vernetzer für wasserquellbare Polymerisate.

3. Verwendung von N-(2'alkenyl)-3-methylenpyrrolidin-2-on der allgemeinen Formel I nach Anspruch 1 und/oder 2, wobei $R^1$, $R^2$, $R^3$ Wasserstoff oder Alkyl mit 1 bis 6 C Atomen, insbesondere 1 bis 4 C Atomen, bedeuten.

4. Verwendung von N-(2'alkenyl)-3-methylenpyrrolidin-2-on der allgemeinen Formel I nach einem oder mehreren der Ansprüche 1 bis 3, dadurch gekennzeichnet, daß $R^1$, $R^2$ und $R^3$ Methyl bedeuten.

5. Verwendung von N-(2'alkenyl)-3-methylenpyrrolidin-2-on der allgemeinen Formel I nach einem oder mehreren der Ansprüche 1 bis 4, dadurch gekennzeichnet, daß eine oder mehrere Verbindungen der Formel I in Mengen von 0,001 bis 2 Gew.%, vorzugsweise 0,02 bis 0,5 Gew.%, bezogen auf die zu polymerisierenden Monomeren eingesetzt werden.

6. Verfahren zur Herstellung von vernetzten, wasserquellbaren Homo- und Copolymerisaten, wobei das Monomere oder die Monomeren in Gegenwart eines Vernetzers bei Temperaturen von 0 bis 130°C, vorzugsweise 10 bis 100°C, polymerisiert werden und die Polymerisation durch energiereiche Strahlen oder chemische Katalysatoren ausgelöst wird, dadurch gekennzeichnet, daß 0,001 bis 2 Gew.%, vorzugsweise 0,02 bis 0,5 Gew.%, bezogen auf die zu polymerisierenden Monomeren, einer Verbindung der allgemeinen Formel I

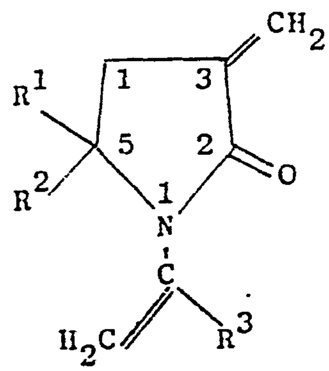

(I)

worin $R^1$, $R^2$, $R^3$ gleich oder verschieden sind und Wasserstoff oder Alkyl, insbesondere Methyl bedeuten, als Vernetzer eingesetzt werden.

7. Vernetztes,wasserquellbares Polyacrylat, dadurch gekennzeichnet, daß die Hauptpolymerenstränge durch 0,001 bis 2 Gew.%, vorzugsweise 0,02 bis 0,5 Gew.%, Reste der Formel Ia

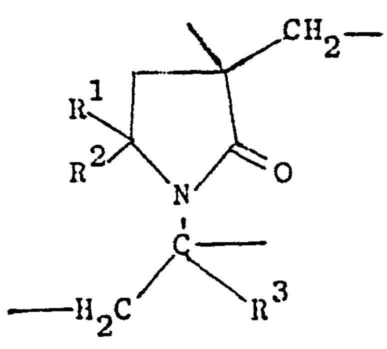

(Ia)

worin $R^1$, $R^2$, $R^3$ gleich oder verschieden sind und Wasserstoff oder Alkyl, insbesondere Methyl, bedeuten, vernetzt sind.

8. Vernetztes, wasserquellbares Copolymerisat aus Acrylsäure und Acrylamid im Gewichtsverhältnis (20 bis 80):(80 bis 20), dadurch gekennzeichnet, daß die Hauptpolymerenstränge durch 0,001 bis 2 Gew.%, vorzugsweise 0,02 bis 0,5 Gew.%, Reste der Formel Ia

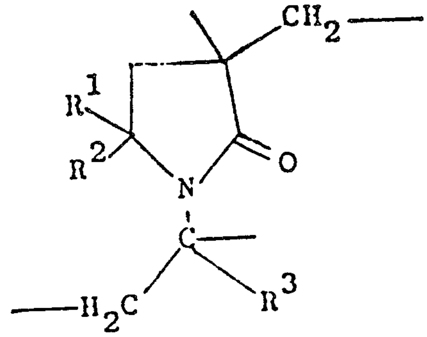

(Ia)

worin $R^1$, $R^2$, $R^3$ gleich oder verschieden sind und Wasserstoff oder Alkyl, insbesondere Methyl, bedeuten, vernetzt sind.

9. Wasserquellbares, vernetztes Copolymerisat, das in den Grundketten in statistischer Verteilung zu

0 bis 60 Gew.% aus Resten der Formel IV

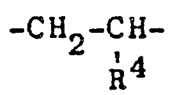

(IV)

0 bis 40 Gew.% aus Resten der Formel V

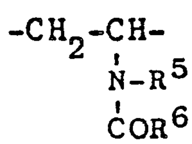

(V)

und 10 bis 95 Gew.% aus Resten der Formel VI

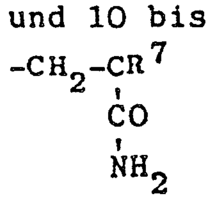

(VI)

besteht, wobei die Summe der Anteile der Reste der Formeln IV und V 5 bis 90 Gew.% beträgt, und das zusätzlich 0,001 bis 2 Gew.%, vorzugsweise 0,02 bis 0,5 Gew.%, bezogen auf das Gesamtgewicht der Grundkettenbestandteile, vernetzende Brückenglieder der Formel Ia

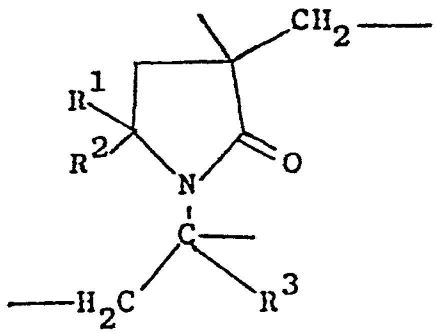

(Ia)

enthält, worin $R^1$, $R^2$, $R^3$ gleich oder verschieden sind und Wasserstoff oder Alkyl, insbesondere Methyl, und und $R^4$ einen Rest der Formeln $-CONH-C(CH_3)_2-CH_2-SO_3^{\ominus}X^{\oplus}$, $-CO-NH-C(CH_3)_2-CH_2-PO_3^{\ominus\ominus}X_2^{\oplus}$, $-SO_3^{\ominus}X^{\oplus}$, $-PO_3^{\ominus\ominus}X_2^{\oplus}$ oder $-\overset{O}{\overset{\|}{P}}(OR^8)_2$ bedeutet, $R^5$ und $R^6$ gleich oder verschieden sind und für Wasserstoff, Methyl, Ethyl oder gemeinsam für Trimethylen stehen, $R^7$ Wasserstoff oder Methyl, $R^8$ Alkyl mit 1 bis 4 C-Atomen und $X^{\oplus}$ ein Kation bedeutet sowie dessen Partialhydrolysate, in denen ein Anteil von bis zu 60 % der ursprünglich vorhandenen Gruppen der Formel V zu Gruppen der Formel II

$$-CH_2-\underset{COO^- X^+}{\underset{|}{CH}}- \qquad (II)$$

hydrolysiert worden sind, wobei die Produkte insgesamt 10 bis 90 Gew.% anionische Reste aufweisende Gruppen der Formeln II und IV enthalten.

10. Wasserquellbare, vernetzte Copolymerisate gemäß Anspruch 9, dadurch gekennzeichnet, daß die Grundketten in statistischer Verteilung zu

1 0 bis 50 Gew.% aus Resten der Formel IV, zu 0 bis 30 Gew.% aus Resten der Formel V und zu 20 bis 95 Gew.% aus Resten der Formel VI bestehen.

0100423

Europäisches Patentamt

# EUROPÄISCHER RECHERCHENBERICHT

Nummer der Anmeldung

EP 83 10 6020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 044 508 (CASSELLA AG.)<br>----- | | C 08 F 246/00<br>C 08 F 226/06<br>C 07 D 207/36 |
| | | | **RECHERCHIERTE SACHGEBIETE (Int. Cl. 3)** |
| | | | C 08 F<br>C 07 D |

Der vorliegende Recherchenbericht wurde für alle Patentansprüche erstellt.

| Recherchenort | Abschlußdatum der Recherche | Prüfer |
|---|---|---|
| DEN HAAG | 02-11-1983 | CAUWENBERG C.L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82